# EUROPÄISCHE PATENTSCHRIFT

(11) **EP 3 052 359 B1**
(45) Veröffentlichungstag und Bekanntmachung des Hinweises auf die Patenterteilung: **20.11.2019**
(21) Anmeldenummer: 14796682.4
(22) Anmeldetag: 26.09.2014
(51) Int. Cl.: B60W 50/04, B60W 50/02, B60W 50/00

(54) **VERFAHREN UND VORRICHTUNG ZUR FUNKTIONSÜBERWACHUNG EINES FAHRERASSISTENZSYSTEMS**
METHOD AND DEVICE FOR MONITORING THE FUNCTION OF A DRIVER ASSISTANCE SYSTEM
PROCÉDÉ ET DISPOSITIF POUR SURVEILLER LE FONCTIONNEMENT D'UN SYSTÈME D'AIDE À LA CONDUITE

(30) Priorität: 02.10.2013 DE 102013220016
(43) Veröffentlichungstag der Anmeldung: 10.08.2016
(73) Patentinhaber: Conti Temic Microelectronic GmbH, 90411 Nürnberg (DE)
(72) Erfinder: FENDT, Günter, Anton, 86529 Schrobenhausen (DE)
(86) Internationale Anmeldenummer: PCT/DE2014/200510
(87) Internationale Veröffentlichungsnummer: WO 2015/048968

(56) Entgegenhaltungen:
- DE-A1- 10 218 228
- DE-A1- 10 218 228
- DE-A1- 19 962 997
- DE-A1- 19 962 997
- JP-A- H0 935 197
- JP-A- H08 285 534
- US-A1- 2013 218 398
- US-A1- 2013 218 398

## Beschreibung

Die Erfindung betrifft ein Verfahren und eine Vorrichtung zur Funktionsüberwachung eines Fahrerassistenzsystems.

Fahrerassistenzsysteme sind grundsätzlich aus dem Stand der Technik bekannt. Sensor-basierte Fahrerassistenzsysteme finden sich zunehmend in Fahrzeugen, um Verkehrssituationen im unmittelbaren Umfeld des Fahrzeugs zu erfassen. Dazu können verschiedene Arten von Sensoren zum Einsatz kommen wie beispielsweise optische Sensoren, welche z.B. als optische Kameras, Nachtsicht-Systeme bzw. Restlichtverstärker-Systeme, Infrarot-Kameras oder Wärmebild-Kameras ausgebildet sein können. Grundsätzlich können die Sensoren aber auch zum Empfang von elektromagnetischer Strahlung anderer Wellenlängen wie z.B. Radar, Lidar oder zum Empfang von Schallwellen wie z.B. Ultraschall ausgebildet sein.

Wenn Verkehrssituationen auch räumlich erfasst werden sollen, werden sogenannte "Stereo-Systeme" zum Einsatz gebracht, welche mindestens zwei Sensoren verwenden, die das Umfeld des Fahrzeugs aus unterschiedlichen Positionen erfassen und damit eine Ermittlung räumlicher Informationen ermöglichen. Hierzu können beispielsweise optische Sensoren wie Stereo-Kameras Verwendung finden, aber auch diese Stereo-Systeme können zum Empfang von elektromagnetischer Strahlung anderer Wellenlängen wie z.B. Radar, Lidar oder zum Empfang von Schallwellen wie z.B. Ultraschall ausgebildet sein.

Für eine fehlerfreie Funktionalität von Stereo-Systemen z.B. unter Verwendung von Stereo-Kameras ist es erforderlich, dass die Justierung der einzelnen Sensoren (beispielsweise von zwei Einzelkameras / Kameramodulen) zueinander sehr exakt erfolgt, und diese Justierung über die gesamte Lebensdauer bzw. Betriebsdauer des Stereo-Systems erhalten bleibt. Diese kann durchaus einen Zeitraum von ca. 15 Jahren betragen. Sollte sich über die Lebenszeit, beispielsweise infolge einer fehlerhaft oder mangelhaft ausgeführten Produktion (z.B. mangelhafte Baugruppenverbindungen, Degradation von optischen Eigenschaften, optische Verstimmung eines Kamerasystems) eine - auch nur geringfügige - Veränderung ergeben, so kann dies zu Fehlfunktionen bzw. zu fehlerhaften Messungen der Baugruppe und damit zu fehlerhaften Ergebnissen führen, wobei diese Fehlfunktion (sofern kein Totalausfall vorliegt) im alltäglichen Fahrzeuggebrauch zunächst für den Fahrzeugbenutzer unerkannt bleiben kann.

Die US 2013/0218398 A1 und die DE 199 62 997 A1 offenbaren bereits Vorrichtungen bzw. Verfahren, bei denen die Umgebung eines Fahrzeugs mit mindestens einem Sensor erfasst und mindestens eine Messgröße aus den erzeugten Sensordaten ermittelt wird, wobei die ermittelte Messgröße zur Funktionsüberwachung mit mindestens einem Referenzwert verglichen wird und eine Ausgabe und/oder Speicherung des Ergebnisses der Funktionsüberwachung erfolgt.

Die JP H08-285534 A zeigt eine Funktionsüberwachung einer in einem Fahrzeug angebrachte Bildverarbeitungsvorrichtung mit einer Mehrzahl von Bildaufnehmern unter Berücksichtigung bekannter Abstände zwischen Straßenmarkierungen.

Die JP H09-035197 A zeigt ein Fahrzeugerkennungsverfahren, mit einer Fehlerdetektion basierend auf der bekannten Größe von Objekten.

Aufgabe der vorliegenden Erfindung ist es nun, ein verbessertes Verfahren und eine verbesserte Vorrichtung zur Funktionsüberwachung eines Fahrerassistenzsystems vorzuschlagen.

Diese Aufgabe wird durch die Gegenstände der unabhängigen Ansprüche gelöst. Weitere Ausgestaltungen der Erfindung ergeben sich aus den abhängigen Ansprüchen.

Die Erfindung betrifft folglich ein Verfahren gemäß Anspruch 1.

Es erfolgt also letztlich eine Validierung einer bekannten Größe, insbesondere eine Validierung einer bereits vor oder bei Durchführung der Funktionsüberwachung bekannten Größe. Damit sind keine aufwändigen, zusätzlichen Testeinrichtungen oder Simulationsverfahren notwendig, vielmehr kann die Funktionsüberwachung eines Fahrerassistenzsystems im Rahmen des normalen Fahrzeug- und Sensorbetriebes auf Basis von ermittelten Messgrößen der Umgebung eines Fahrzeuges erfolgen. Die Referenzwerte können dabei bereits in gespeicherter Form vorliegen und/oder parallel zur Ermittlung der Messgrößen beispielsweise per Datenabruf bereitgestellt werden, so dass mit geringem Zeitaufwand und geringem Verarbeitungsaufwand - insbesondere in Echtzeit - eine Funktionsüberwachung eines Fahrerassistenzsystems erfolgen kann.

Dabei kann vorgesehen sein, dass zur Durchführung und/oder zur Verbesserung der Ermittlung einer ersten Messgröße mindestens eine zweite Messgröße herangezogen wird, welche auf Basis von Sensordaten mindestens eines weiteren Sensors ermittelt wird. Der mindestens eine weitere Sensor kann wie bereits oben ausgeführt als jede Art geeigneter Sensor ausgebildet sein, insbesondere als optischer Sensor wie z.B. als optische Kamera, Nachtsicht-System bzw. Restlichtverstärker-System, Infrarot-Kamera oder Wärmebild-Kamera. Grundsätzlich kann der mindestens eine weitere Sensor aber auch zum Empfang von elektromagnetischer Strahlung anderer Wellenlängen wie z.B. Radar, Lidar oder zum Empfang von Schallwellen wie z.B. Ultraschall ausgebildet sein. Weiter kann der mindestens eine weitere Sensor auch als Sensor zur Ermittlung von Ortungs- und Positionsdaten, Abstandsdaten, Entfernungsdaten, Streckendaten, Zeitdaten, Geschwindigkeitsdaten, Lagedaten oder Daten zu Relativ-Entfernungen ausgebildet sein.

Es kann vorgesehen sein, dass als Messgröße die räumliche Ausdehnung von Objekten ermittelt wird. Als Messgröße kann beispielsweise die räumliche Ausdehnung (Länge, Breite, Höhe) von Fahrzeugen ermittelt werden. Es kann aber auch die räumliche Ausdehnung (Länge, Breite, Höhe) von ortsfesten Objekten wie Straßen, Gebäuden, Verkehrsschildern oder Fahrbahnbegrenzungspfosten ermittelt werden.

Alternativ oder zusätzlich kann vorgesehen sein, dass als Messgröße die räumliche Relativ-Entfernung zu Objekten ermittelt wird. Als Messgröße kann beispielsweise die räumliche Relativ-Entfernung zu Fahrzeugen in der Umgebung ermittelt werden. Es kann aber auch die räumliche Relativ-Entfernung zu ortsfesten Objekten wie Gebäuden, Brückenpfeilern, Verkehrsschildern oder Fahrbahnbegrenzungspfosten ermittelt werden. Alternativ oder zusätzlich kann vorgesehen sein, dass als Messgröße der räumliche Abstand von Objekten untereinander ermittelt wird. Als Messgröße kann beispielsweise der räumliche Abstand von ortsfesten Objekten wie Gebäuden, Fahrbahnbegrenzungspfosten oder Fahrbahnmarkierungen untereinander ermittelt werden.

Erfindungsgemäß ist vorgesehen, dass eine einmalige, in sich abgeschlossene Messung zur Ermittlung der Messgröße erfolgt und damit die Messgröße - ggf. im Rahmen einer hinreichenden Genauigkeit - bereits für einen Vergleich mit Referenzwerten verwendet wird.

Als eine nicht beanspruchte Alternative kann vorgesehen sein, dass zeitlich aufeinanderfolgende Messungen zur Ermittlung der Messgröße erfolgen. Diese können entweder zyklisch bzw. in regelmäßigen Abständen erfolgen, wobei aber jeweils zu einer bestimmten Zeit eine einmalige, in sich abgeschlossene Messung zur Ermittlung der Messgröße erfolgt. Es kann aber auch vorgesehen sein, dass erst durch mehrere zeitlich aufeinanderfolgende Messungen zeitabhängige Sensordaten zu unterschiedlichen Zeitpunkten erzeugt werden und durch Zusammenführung der mehreren Sensordaten unterschiedlicher Zeitpunkte die Ermittlung der Messgröße erfolgt.

Weiter kann vorgesehen sein, dass im Rahmen der Ermittlung der Messgröße historische und/oder gespeicherte Referenzwerte für diese Messgröße verwendet werden. Diese Referenzwerte können beispielsweise Werte der räumlichen Ausdehnung (Länge, Breite, Höhe) von Fahrzeugen sein, wie sie in Fahrzeug-Datenbanken - über eine drahtlose Datenverbindung online (also per Datenabruf) verfügbar oder im Fahrzeug selbst in einer Speichereinrichtung gespeichert -vorliegen können. Es können aber auch Werte der räumlichen Ausdehnung (Länge, Breite, Höhe) von ortsfesten Objekten wie Straßen, Gebäuden, Verkehrsschildern, Fahrbahnbegrenzungspfosten als Referenzwerte verwendet werden, oder der räumliche Abstand von ortsfesten Objekten wie Gebäuden, Fahrbahnbegrenzungspfosten oder Fahrbahnmarkierungen untereinander, wie sie in Straßenkarten, Satellitenkartendaten, Street-View-Daten oder als Daten über Verkehrszeichen und Verkehrseinrichtungen - über eine drahtlose Datenverbindung online (also per Datenabruf) verfügbar oder im Fahrzeug selbst in einer Speichereinrichtung gespeichert -vorliegen können. Die gespeicherten Referenzwerte können vorgespeichert vorliegen, oder sie können als historische Daten während des Betriebes des Fahrzeuges (oder durch andere Fahrzeuge, die diese in einer gemeinsamen Datenbank einspeisen) durch Sensormessungen und entsprechende Ermittlung von Messgrößen und speichern der ermittelten Messgrößen gesammelt werden und es kann dann im Rahmen einer Funktionsüberwachung eines Fahrerassistenzsystems dann auf diese historischen Daten als Referenzwerte zurückgegriffen werden.

Die Erfindung betrifft auch eine Vorrichtung gemäß Anspruch 6.

Der mindestens eine Sensor kann wie bereits oben ausgeführt als jede Art geeigneter Sensor ausgebildet sein, insbesondere als optischer Sensor wie z.B. als optische Kamera, Nachtsicht-System bzw. Restlichtverstärker-System, Infrarot-Kamera oder Wärmebild-Kamera. Grundsätzlich kann der Sensor aber auch zum Empfang von elektromagnetischer Strahlung anderer Wellenlängen wie z.B. Radar, Lidar oder zum Empfang von Schallwellen wie z.B. Ultraschall ausgebildet sein. Weiter kann der Sensor auch in dieser Ausführungsform der Erfindung als Sensor zur Ermittlung von Ortungs- und Positionsdaten, Abstandsdaten, Entfernungsdaten, Streckendaten, Zeitdaten, Geschwindigkeitsdaten, Lagedaten oder Daten zu Relativ-Entfernungen ausgebildet sein.

Die Vorrichtung kann eine datentechnische Verbindung zu einem Datenspeicher aufweisen, welcher Daten zu historischen und/oder gespeicherten Referenzwerten der ermittelten Messgröße in maschinenlesbarer Form enthält. Diese datentechnische Verbindung kann als leitungsgebundene Verbindung, insbesondere elektrische oder optische Leitungs-Verbindung ausgebildet sein, sie kann aber auch als drahtlose Verbindung, beispielsweise als Funkverbindung oder drahtlose optische Verbindung ausgebildet sein.

Eine weitere Ausführungsform der Erfindung betrifft ein Fahrerassistenzsystem mit einer Vorrichtung nach der Erfindung und wie hierin beschrieben.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1:: schematische Darstellung der Funktionsüberwachung eines Fahrerassistenzsystems durch Ermittlung der räumlichen Ausdehnung eines Objekts
- Fig. 2:: schematische Darstellung der Funktionsüberwachung eines Fahrerassistenzsystems durch Ermittlung des räumlichen Abstandes von Objekten untereinander
- Fig. 3:: schematische Darstellung der Funktionsüberwachung eines Fahrerassistenzsystems durch zeitlich aufeinanderfolgende Ermittlungen der räumlichen Relativ-Entfernung zu einem Objekt

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

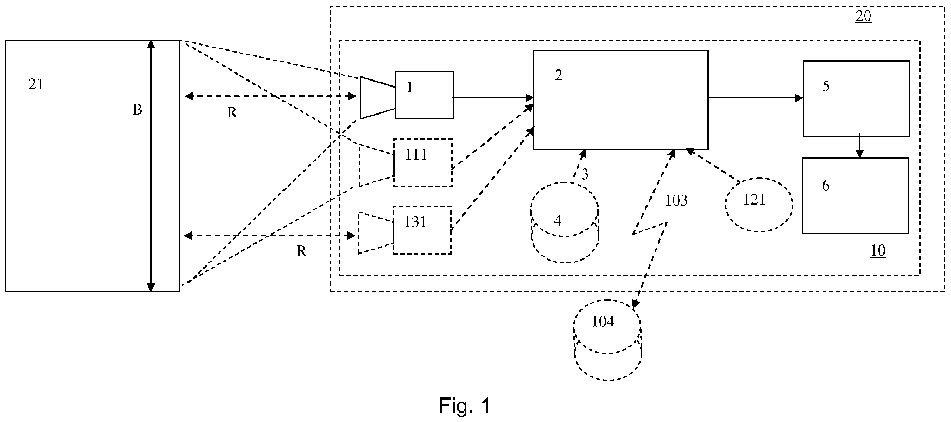

In Fig. 1 ist schematisch die Funktionsüberwachung eines Fahrerassistenzsystems durch Ermittlung der räumlichen Ausdehnung eines Objekts 21 dargestellt, wobei die Fig. 1 schematisch eine entsprechende Vorrichtung 10 in einem Fahrzeug 20 und die entsprechenden Verfahrensschritte zur Funktionsüberwachung eines Fahrerassistenzsystems zeigt. Mit Hilfe eines ersten Sensors 1 und - im Falle eines Stereo-Sensor-Systems zusätzlich auch mit Hilfe eines zweiten Sensors 111 - erfolgt die Erfassung der Umgebung eines Fahrzeuges 20. Es werden Sensordaten der Umgebung des Fahrzeuges 20 erzeugt und es erfolgt eine Ermittlung mindestens einer Messgröße B, R aus den erzeugten Sensordaten, nämlich mit Hilfe einer Ermittlungs-Einrichtung 2 welche zum Erzeugen von Sensordaten der Umgebung des Fahrzeuges 20 und zur Ermittlung mindestens einer Messgröße B, R aus den erzeugten Sensordaten ausgebildet ist.

Die Ermittlungs-Einrichtung 2 ist datentechnisch mit einer Vergleichseinrichtung 5 verbunden, welche zum Vergleich der mindestens einen Messgröße B, R mit Referenzwerten für diese Messgröße B, R ausgebildet ist. Die Vergleichseinrichtung 5 ist schließlich mit einer Ausgabe- und/oder Speichereinrichtung 6 verbunden, welche zur Ausgabe und/oder Speicherung eines Ergebnisses der Funktionsüberwachung in Abhängigkeit vom Ergebnis des Vergleichs ausgebildet ist. Es erfolgt also ein Vergleich der mindestens einen Messgröße B, R mit Referenzwerten für diese Messgröße B, R und eine Ausgabe und/oder Speicherung eines Ergebnisses der Funktionsüberwachung in Abhängigkeit vom Ergebnis des Vergleichs.

Im Ausführungsbeispiel nach Fig. 1 wird als erste Messgröße die räumliche Ausdehnung B eines Objekts 21 ermittelt, beispielsweise die Breite eines anderen Fahrzeugs. Es kann aber auch die räumliche Ausdehnung B (Länge, Breite, Höhe) eines ortsfesten Objekts 21 ermittelt werden, beispielsweise einer Straße, eines Gebäudes, eines Verkehrsschildes oder eines Fahrbahnbegrenzungspfostens. Die Ausdehnung B kann durch geometrische Verfahren (z.B. Trigonometrie) ermittelt werden.

Zur Durchführung und/oder zur Verbesserung der Ermittlung der ersten Messgröße B, also der räumlichen Ausdehnung eines Objekts 21, kann als weitere, zweite Messgröße die räumliche Relativ-Entfernung R zu dem Objekt 21, also der Abstand zu dem Objekt 21 zum Zeitpunkt der Messung der räumlichen Ausdehnung B ermittelt werden. Es ist dann also im Zeitpunkt der Messung der räumlichen Ausdehnung B auch gleichzeitig die räumliche Relativ-Entfernung R vom Fahrzeug 20 zu dem Objekten 21 bekannt. Dies erfolgt im Ausführungsbeispiel nach Fig. 1 auf Basis von Sensordaten mindestens eines weiteren Sensors 1, 111, 131. Dieser mindestens eine weitere Sensor 1, 111, 131 kann einer von zwei ohnehin vorhandenen Sensoren 1, 111 eines Stereo-Sensor-Systems sein, es kann aber auch zusätzlich zu zwei Sensoren 1, 111 eines Stereo-Sensor-Systems noch ein weiterer, zusätzlicher Sensor 131 zur Ermittlung der räumlichen Relativ-Entfernung R zu dem Objekten 21 vorgesehen sein.

Es können zu einer weiteren Verbesserung der Ermittlung der ersten Messgröße B oder zu Ermittlung sonstiger Betriebsparameter des Fahrzeugs 20 auch noch weitere Sensoren 121 vorgesehen sein, beispielsweise zur Ermittlung von Ortungs- und Positionsdaten, Abstandsdaten, Entfernungsdaten, Streckendaten, Zeitdaten, Geschwindigkeitsdaten oder Lagedaten.

Die Ermittlungs-Einrichtung 2 ist über eine datentechnische Verbindung 3, 103 mit einem Datenspeicher 4, 104 verbunden, welcher Daten zu historischen und/oder gespeicherten Referenzwerten der Messgröße B, R in maschinenlesbarer Form enthält und aus dem diese historischen und/oder gespeicherten Referenzwerte der Messgröße B, R von der Ermittlungs-Einrichtung 2 abgefragt werden können. Damit können im Rahmen der Funktionsüberwachung eines Fahrerassistenzsystems parallel zur Ermittlung der Messgröße B, R Referenzwerte dieser Messgröße in Form von historischen und/oder gespeicherten Referenzwerten für einen Vergleich der ermittelten Messgröße B, R mit den Referenzwerten für diese Messgröße B, R verwendet werden. Diese historischen und/oder gespeicherten Referenzwerte sind im Ausführungsbeispiel nach Figur 1 Referenzwerte der Messgröße B, also der räumlichen Ausdehnung eines Objekts 21. Diese Referenzwerte B können beispielsweise historische und/oder gespeicherte Werte der räumlichen Ausdehnung (Länge, Breite, Höhe) von Fahrzeugen sein, wie sie in Fahrzeug-Datenbanken vorliegen können. Es können aber auch historische und/oder gespeicherte Werte der räumlichen Ausdehnung (Länge, Breite, Höhe) von ortsfesten Objekten wie Gebäuden, Verkehrsschildern, Fahrbahnbegrenzungspfosten als Referenzwerte B verwendet werden. Historische Referenzwerte sind dabei z.B. Werte, die über die Betriebsdauer des Fahrzeugs 20 durch eine Reihe von Messungen - ggf. im Abgleich mit Daten zur Erkennung von Fahrzeugtypen - mit Hilfe der Sensoren 1, 111 gesammelt wurden. Gespeicherte Werte können vor Inbetriebnahme des Fahrzeugs, bei einer Wartung oder auch über eine datentechnische Verbindung 103 an das Fahrzeug 20 übertragen und in einen Datenspeicher 4 eingespeichert bzw. vorgespeichert werden, so dass sie vor einer erstmaligen oder erneuten Inbetriebnahme des Fahrzeugs 20 bereits im Datenspeicher 4 gespeichert vorliegen.

Die datentechnische Verbindung 3, 103 kann als leitungsgebundene datentechnische Verbindung 3, insbesondere elektrische oder optische Leitungs-Verbindung ausgebildet sein. Sie kann aber auch als drahtlose datentechnische Verbindung 103, beispielsweise als Funkverbindung oder drahtlose optische Verbindung ausgebildet sein.

Wenn die ermittelte räumliche Ausdehnung B (beispielsweise die Breite eines vorausfahrenden Fahrzeugs) mit den im Datenspeicher 4, 104 hinterlegten historischen und/oder gespeicherten Referenzwerten für diese räumliche Ausdehnung B (beispielsweise mit Fahrzeug-Soll-Breiten) übereinstimmt, kann davon ausgegangen werden, dass das Fahrerassistenzsystems 10 korrekt arbeitet. Ergibt die ermittelte räumliche Ausdehnung B (also z.B. die Breite eines vorausfahrenden Fahrzeugs) eine deutliche Abweichung zu den historischen und/oder gespeicherten Referenzwerten für diese räumliche Ausdehnung B, so ist auf einen Fehler im System zu schließen. Das Ergebnis dieses Vergleichs kann mit Hilfe der Vergleichseinrichtung 5 ermittelt und über die Ausgabe- und/oder Speichereinrichtung 6 dem Fahrzeugbenutzer ausgegeben und/oder in einem Datenspeicher abgespeichert werden. Diese Funktionsüberwachung ist insbesondere dann sehr effektiv, wenn es sich bei dem System um ein optisches Stereo-System handelt und konstante optische Eigenschaften des optischen Systems wie z.B. konstante Linsenparameter, Brennweite etc. angenommen werden können.

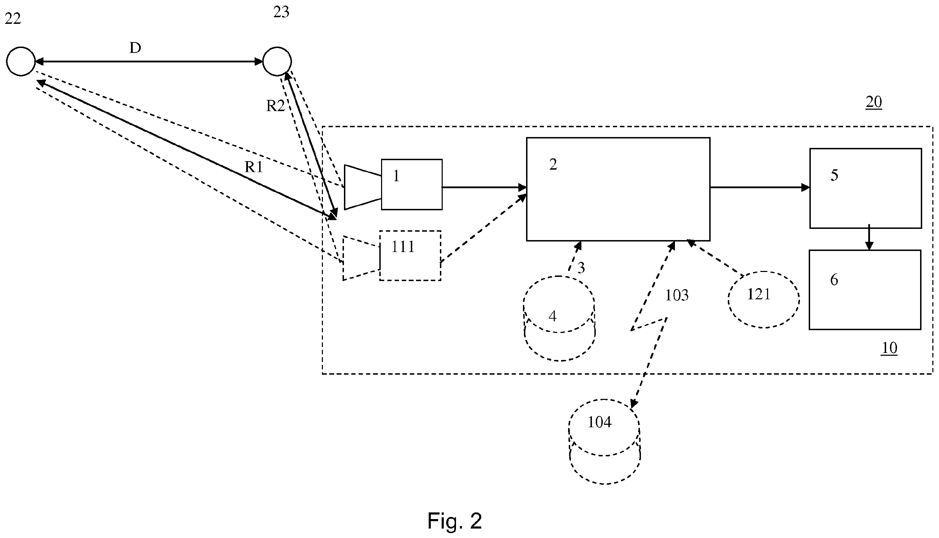

Fig. 2 zeigt schematisch ein Ausführungsbeispiel für eine Funktionsüberwachung eines Fahrerassistenzsystems durch Ermittlung des räumlichen Abstandes von Objekten 22, 23 untereinander. Wie in der Fig. 1 ist auch in Fig. 2 schematisch eine entsprechende Vorrichtung 10 in einem Fahrzeug 20 gezeigt und es sind die entsprechenden Verfahrensschritte zur Funktionsüberwachung eines Fahrerassistenzsystems schematisch dargestellt. Mit Hilfe eines ersten Sensors 1 und - im Falle eines Stereo-Sensor-Systems zusätzlich auch mit Hilfe eines zweiten Sensors 111 - erfolgt die Erfassung der Umgebung eines Fahrzeuges 20.

Es werden nun Sensordaten der Umgebung des Fahrzeuges 20 erzeugt und es erfolgt eine Ermittlung der Messgrößen R1, R2, nämlich der räumlichen Relativ-Entfernungen R1, R2 des Fahrzeugs 20 zu Objekten 22, 23, ermittelt mit Hilfe eines ersten Sensors 1 und - im Fall eines Stereo-Systems - auch mit Hilfe eines zweiten Sensors 111. Die Ermittlung der Messgrößen R1, R2 erfolgt aus den erzeugten Sensordaten, nämlich mit Hilfe einer Ermittlungs-Einrichtung 2. Aus den ermittelten Messgrößen R1, R2 wird anschließend in der Ermittlungs-Einrichtung 2 eine weitere Messgröße D, nämlich der räumlichen Abstand D der Objekte 22, 23 untereinander, ermittelt. Die Messgröße D kann durch geometrische Verfahren (z.B. Trigonometrie) ermittelt werden.

Die Ermittlungs-Einrichtung 2 ist wiederum datentechnisch mit einer Vergleichseinrichtung 5 verbunden, welche zum Vergleich der mindestens einen Messgröße D mit Referenzwerten für diese Messgröße D ausgebildet ist. Die Vergleichseinrichtung 5 ist schließlich mit einer Ausgabe- und/oder Speichereinrichtung 6 verbunden, welche zur Ausgabe und/oder Speicherung eines Ergebnisses der Funktionsüberwachung in Abhängigkeit vom Ergebnis des Vergleichs ausgebildet ist. Es erfolgt wiederum ein Vergleich der mindestens einen Messgröße D mit Referenzwerten für diese Messgröße D und eine Ausgabe und/oder Speicherung eines Ergebnisses der Funktionsüberwachung in Abhängigkeit vom Ergebnis des Vergleichs. Die Ermittlungs-Einrichtung 2 ist dabei wiederum über eine datentechnische Verbindung 3, 103 mit einem Datenspeicher 4, 104 verbunden, welcher Daten zu historischen und/oder gespeicherten Referenzwerten der Messgröße D in maschinenlesbarer Form enthält und aus dem diese historischen und/oder gespeicherten Referenzwerte der Messgröße D von der Ermittlungs-Einrichtung 2 abgefragt werden können. Diese datentechnische Verbindung 3, 103 kann auch in diesem Fall als leitungsgebundene datentechnische Verbindung 3, insbesondere elektrische oder optische Leitungs-Verbindung ausgebildet sein. Sie kann aber auch als drahtlose datentechnische Verbindung 103, beispielsweise als Funkverbindung oder drahtlose optische Verbindung ausgebildet sein.

Als Messgröße D kann der räumliche Abstand von ortsfesten Objekten 22, 23 wie Gebäuden, Fahrbahnmarkierungen oder Fahrbahnbegrenzungspfosten untereinander ermittelt und mit Referenzwerten verglichen werden, wie sie in Straßenkarten, Satellitenkartendaten, Street-View-Daten oder als Daten über Verkehrszeichen und Verkehrseinrichtungen über eine datentechnische Verbindung 3, 103 verfügbar in einem fahrzeug-externen Datenspeicher 104 oder im Fahrzeug selbst in einem Datenspeicher 4 gespeichert vorliegen können. Hierzu ist es nicht erforderlich, dass permanent Objekte 22, 23 wie Fahrbahnbegrenzungspfosten vorhanden sind, da das System die Wahlfreiheit hat, eine Messung innerhalb eines bestimmten Zeitintervalls (z.B. innerhalb 100 Betriebsstunden) durchzuführen, wenn bestimmte Objekte 22, 23 erkannt werden, die sich für eine Durchführung einer Funktionsüberwachung eignen.

Die Referenzwerte können vorgespeichert vorliegen, wie bereits oben beschrieben. Sie können aber auch als historische Daten während des Betriebes des Fahrzeuges 20 (oder durch andere Fahrzeuge, die diese in einer gemeinsamen Datenbank einspeisen) durch Sensormessungen und entsprechende Ermittlung von Messgrößen D und durch Speichern der ermittelten Messgrößen D gesammelt werden. Es kann dann im Rahmen einer Funktionsüberwachung des Fahrerassistenzsystems dann auf diese historischen und/oder vorgespeicherten Daten als Referenzwerte zurückgegriffen werden.

Auch bei diesem Ausführungsbeispiel können zu einer weiteren Verbesserung der Ermittlung der Messgröße D oder zu Ermittlung sonstiger Betriebsparameter des Fahrzeugs 20 weitere Sensoren 121 vorgesehen sein, beispielsweise zur Ermittlung von Ortungs- und Positionsdaten, Abstandsdaten, Entfernungsdaten, Streckendaten, Zeitdaten, Geschwindigkeitsdaten oder Lagedaten.

Wenn die ermittelten räumlichen Abstände D der ortsfesten Objekte 22, 23 mit den im Datenspeicher 4, 104 hinterlegten historischen und/oder gespeicherten Referenzwerten für diese räumlichen Abstände D übereinstimmen, kann davon ausgegangen werden, dass das Fahrerassistenzsystems 10 korrekt arbeitet. Ergeben die ermittelten räumlichen Abstände D eine deutliche Abweichung zu den historischen und/oder gespeicherten Referenzwerten für diese räumlichen Abstände D, so ist auf einen Fehler im System zu schließen.

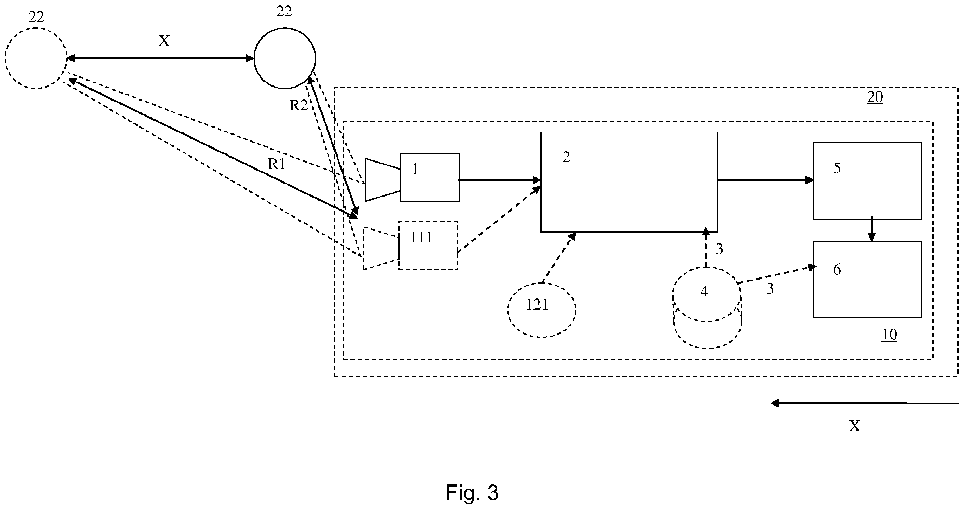

In Fig. 3 ist nun schematisch ein nicht beanspruchtes Ausführungsbeispiel für eine Funktionsüberwachung eines Fahrerassistenzsystems durch zeitlich aufeinanderfolgende Ermittlungen der räumlichen Relativ-Entfernungen R1, R2 zu einem Objekt 22, ermittelt mit Hilfe mindestens eines Sensors 1, 111. Es kann dabei die räumliche Relativ-Entfernung R1, R2 zu ortsfesten Objekten wie Gebäuden, Brückenpfeilern, Verkehrsschildern oder Fahrbahnbegrenzungspfosten ermittelt werden. Wie anhand der Fig. 1 und 2 bereits beschrieben ist auch hier schematisch eine entsprechende Vorrichtung 10 in einem Fahrzeug 20 gezeigt und es sind die entsprechenden Verfahrensschritte zur Funktionsüberwachung eines Fahrerassistenzsystems schematisch dargestellt. Mit Hilfe eines ersten Sensors 1 und - im Falle eines Stereo-Sensor-Systems zusätzlich auch mit Hilfe eines zweiten Sensors 111 - erfolgt die Erfassung der Umgebung eines Fahrzeuges 20.

Es werden auch in diesem Fall Sensordaten der Umgebung des Fahrzeuges 20 erzeugt und es erfolgt eine Ermittlung der Messgrößen R1, R2, nämlich der räumlichen Relativ-Entfernungen R1, R2 des Fahrzeugs 20 zu einem ortsfesten Objekt 22, ermittelt mit Hilfe eines ersten Sensors 1 - und im Fall eines Stereo-Systems auch mit Hilfe eines zweiten Sensors 111 - jedoch zu unterschiedlichen Zeitpunkten, weshalb sich zu einem ersten Zeitpunkt eine räumliche Relativ-Entfernung R1 und zu einem zweiten, späteren Zeitpunkt eine räumliche Relativ-Entfernung R2 zu dem Objekt 22 ergibt. Das Fahrzeug 20 hat sich in dieser Zeit um eine Strecke X vorwärtsbewegt, d.h. das Objekt X ist zum zweiten, späteren Zeitpunkt relativ zum Fahrzeug 20 um eine Strecke X näher am Fahrzeug als zum ersten Zeitpunkt. Für den Fall eines Stereo-Systems mit einem zweiten Sensor 111 gilt analoges für eine Messung mit Hilfe von zwei Sensoren 1, 111, d.h. auch in diesem Fall ergibt sich zu einem ersten Zeitpunkt eine räumliche Relativ-Entfernung R1 und zu einem zweiten, späteren Zeitpunkt eine räumlich Relativ-Entfernung R2 des Fahrzeugs 20 zu dem Objekt 22.

Die Ermittlung der Messgrößen R1, R2 erfolgt aus den erfassten Sensordaten, nämlich mit Hilfe einer Ermittlungs-Einrichtung 2. Aus dem Unterschied der räumlichen Relativ-Entfernungen R1, R2 kann die Ermittlungs-Einrichtung 2 durch geometrische Verfahren (z.B. Trigonometrie) die Strecke X ermitteln. Dabei kann auch ein klassischer Structure-From-Motion-Ansatz verwendet werden, wobei bei bekannter Eigenbewegung des Fahrzeugs 20 die Entfernung zu dem Objekt 22 aus Bilddaten ermittelt wird, die die Ermittlungs-Einrichtung aus den Sensordaten des Sensors 1 - und im Fall eines Stereo-Systems auch des Sensors 111 - erzeugt. Hierzu können zusätzlich Daten sonstiger Betriebsparameter des Fahrzeugs 20 verwendet werden, welche mit Hilfe weitere Sensoren 121 gewonnen werden, beispielsweise mit Hilfe weiterer Sensoren 121 zur Ermittlung von Ortungs- und Positionsdaten, Entfernungsdaten, Streckendaten, Zeitdaten, Geschwindigkeitsdaten oder Lagedaten. So können bezüglich ortsfesten Objekten 22 während der Bewegung des Fahrzeugs die Messgrößen R1, R2 als Relativ-Entfernungen zu unterschiedlichen Zeitpunkten ermittelt werden. Die Messgröße für die Strecke X kann dann aus den Relativ-Entfernungen R1, R2 zwischen Fahrzeug 20 und Objekt 22 aus den zeitlich auseinanderliegenden Messungen ermittelt werden. Parallel dazu erfolgt eine Ermittlung eines Referenzwertes für die Strecke X aus den weiteren Betriebsparametern des Fahrzeugs 20 - beispielsweise aus der ermittelten Geschwindigkeit und der ermittelten Zeit zwischen den Messungen. Der ermittelte Wert für die Messgröße X kann anschließend mit dem ermittelten Referenzwert für die Messgröße X verglichen werden.

Es kann zusätzlich auch eine weitere Verbesserung der Messung durch Einbezug weiterer Messgrößen weiterer Sensoren 121 erfolgen, beispielsweise eines Positionssensors zur Ermittlung von zeitabhängigen Positionsänderungen oder von Sensoren zur Ermittlung von Radumfangsdaten und Sensoren zur Ermittlung der Umdrehungszahl der Räder, so dass aus der zeitlichen Änderung der Position bzw. aus den zeitabhängigen Daten über die auf der Straße zurückgelegten Radumfangs-Distanzen ebenfalls bzw. ergänzend die Geschwindigkeit und/oder die zurückgelegte Strecke X ermittelt werden kann.

Die Ermittlungs-Einrichtung 2 ist wiederum datentechnisch mit einer Vergleichseinrichtung 5 verbunden, welche zum Vergleich der mindestens einen Messgröße X mit den mit Hilfe von Sensoren 121 ermittelten Referenzwerten für diese Messgröße X ausgebildet ist. Die Vergleichseinrichtung 5 ist schließlich mit einer Ausgabe- und/oder Speichereinrichtung 6 verbunden, welche zur Ausgabe und / oder Speicherung eines Ergebnisses der Funktionsüberwachung in Abhängigkeit vom Ergebnis des Vergleichs ausgebildet ist. Es erfolgt wiederum ein Vergleich der mindestens einen Messgröße X mit Referenzwerten für diese Messgröße und eine Ausgabe und/oder Speicherung eines Ergebnisses der Funktionsüberwachung in Abhängigkeit vom Ergebnis des Vergleichs. Die Ermittlungs-Einrichtung 2 oder die Ausgabe- und/oder Speichereinrichtung 6 ist dabei über eine datentechnische Verbindung 3 mit einem Datenspeicher 4 verbunden.

Wenn die ermittelte Strecke X mit dem Referenzwert für diese Strecke X übereinstimmt, kann davon ausgegangen werden, dass das Fahrerassistenzsystem 10 korrekt arbeitet. Ergibt die ermittelte Strecke X eine deutliche Abweichung zu dem Referenzwert für diese Strecke X, so ist auf einen Fehler im System zu schließen.

### Bezugszeichen

- 1: Sensor
- 2: Ermittlungs-Einrichtung
- 3: datentechnische Verbindung
- 4: Datenspeicher
- 5: Vergleichseinrichtung
- 6: Ausgabe- und/oder Speichereinrichtung
- 10: Fahrerassistenzsystem
- 20: Fahrzeug
- 21: Objekt
- 22: Objekt
- 23: Objekt
- 111: Sensor
- 121: Sensor
- 131: Sensor
- B: räumliche Ausdehnung von Objekten
- D: räumlicher Abstand von Objekten
- R: räumliche Relativ-Entfernung zu Objekten
- R1: räumliche Relativ-Entfernung zu Objekten
- R2: räumliche Relativ-Entfernung zu Objekten
- X: zurückgelegte Wegstrecke

## Patentansprüche

1. Verfahren zur Funktionsüberwachung eines Fahrerassistenzsystems mit den folgenden Schritten:
- Erfassen der Umgebung eines Fahrzeuges (20) mit mindestens einem Sensor (1,111, 121, 131),
- Erzeugen von Sensordaten der Umgebung des Fahrzeuges (20),
- Ermittlung mindestens einer Messgröße (B, D, R, R1, R2) aus den erzeugten Sensordaten,
- Vergleich der mindestens einen Messgröße (B, D, R, R1, R2) mit Referenzwerten für diese Messgröße (B, D, R, R1, R2) und
- Ausgabe und/oder Speicherung eines Ergebnisses der Funktionsüberwachung in Abhängigkeit vom Ergebnis des Vergleichs,
**dadurch gekennzeichnet, dass**
- eine einmalige Messung zur Ermittlung der Messgröße (B, D, R, R1, R2) erfolgt.

2. Verfahren nach Anspruch 1, **dadurch gekennzeichnet, dass** zur Durchführung und/oder zur Verbesserung der Ermittlung einer ersten Messgröße (B, D, R, R1, R2) mindestens eine zweite Messgröße (B, D, R, R1, R2) herangezogen wird, welche auf Basis von Sensordaten mindestens eines weiteren Sensors (111, 121, 131) ermittelt wird.

3. Verfahren nach einem der Ansprüche 1 bis 2, **dadurch gekennzeichnet, dass** als Messgröße (B, D, R, R1, R2) die räumliche Relativ-Entfernung (R, R1, R2) zu Objekten (21, 22, 23) ermittelt wird.

4. Verfahren nach einem der Ansprüche 1 bis 3, **dadurch gekennzeichnet, dass** im Rahmen der Ermittlung der Messgröße (B, D, R, R1, R2) historische und/oder gespeicherte Referenzwerten für diese Messgröße (B, D, R, R1, R2) verwendet werden.

5. Verfahren nach einem der Ansprüche 1 bis 4, **dadurch gekennzeichnet, dass** als Messgröße (B, D, R, R1, R2) die räumliche Ausdehnung (B) und/oder der räumliche Abstand (D) von Objekten (21, 22, 23) ermittelt wird.

6. Vorrichtung zur Funktionsüberwachung eines Fahrerassistenzsystems, aufweisend:
- mindestens einen Sensor (1,111, 121, 131) zum Erfassen der Umgebung eines Fahrzeuges (20),
- einer Ermittlungs-Einrichtung (2), ausgebildet Erzeugen von Sensordaten der Umgebung des Fahrzeuges (20) und zur Ermittlung mindestens einer Messgröße (B, D, R, R1, R2) aus den erzeugten Sensordaten,
- einer Vergleichseinrichtung (5), ausgebildet zum Vergleich der mindestens einen Messgröße (B, D, R, R1, R2) mit Referenzwerten für diese Messgröße (B, D, R, R1, R2) und
- einer Ausgabe- und/oder Speichereinrichtung (6) zur Ausgabe und / oder Speicherung eines Ergebnisses der Funktionsüberwachung in Abhängigkeit vom Ergebnis des Vergleichs
**dadurch gekennzeichnet, dass**
- die Vorrichtung zur Umsetzung eines Verfahrens nach einem der vorangegangenen Ansprüche ausgebildet ist.

7. Vorrichtung nach Anspruch 6, aufweisend eine datentechnische Verbindung (3, 103) zu einem Datenspeicher (4, 104) welcher Daten zu historischen und/oder gespeicherten Referenzwerten der ermittelten Messgröße (B, D, R, R1, R2) in maschinenlesbarer Form enthält.

8. Fahrerassistenzsystem mit einer Vorrichtung nach einem der Ansprüche 6 oder 7.

## Claims

1. A method for monitoring the function of a driver assistance system, having the following steps:
- detecting the surroundings of a vehicle (20) with at least one sensor (1, 111, 121, 131),
- generating sensor data of the surroundings of the vehicle (20),
- determining at least one measured quantity (B, D, R, R1, R2) from the generated sensor data,
- comparing the at least one measured quantity (B, D, R, R1, R2) with reference values for said measured quantity (B, D, R, R1, R2), and outputting and/or storing a result of the monitoring of the function depending on the results of the comparison,
- **characterized in that**
- a one-time measurement is carried out for determining the measured quantity (B, D, R, R1, R2).

2. The method according to Claim 1, **characterized in that**, for executing and/or improving the determination of a first measured quantity (B, D, R, R1, R2), at least one second measured quantity (B, D, R, R1, R2) which is determined based on sensor data of at least one further sensor (111, 121, 131) is utilized.

3. The method according to Claim 1, **characterized in that** the spatial relative distance (R, R1, R2) from objects (21, 22, 23) is determined as the measured quantity (B, D, R, R1, R2).

4. The method according to any one of Claims 1 to 3, **characterized in that**, within the framework of determining the measured quantity (B, D, R, R1, R2), historical and/or stored reference values are used for said measured quantity (B, D, R, R1, R2).

5. The method according to any one of Claims 1 to 4, **characterized in that** the spatial extension (B) and/or the spatial distance (D) of objects (21, 22, 23) are determined as the measured quantity (B, D, R, R1, R2).

6. A device for function monitoring of a driver assistance system, having:
- at least one sensor (1, 111, 121, 131) for detecting the surroundings of a vehicle (20),
- a determination device (2) configured to generate sensor data from the surroundings of the vehicle (20) and for determining at least one measured quantity (B, D, R, R1, R2) from the generated sensor data,
- a comparison device (5) for comparing the at least one measured quantity (B, D, R, R1, R2) with reference values for said measured quantity (B, D, R, R1, R2), and
- an output and/or storage device (6) for outputting and/or storing a result of the function monitoring depending on the results of the comparison,
**characterized in that**
- the device is formed for executing a method according to any one of the preceding Claims.

7. The device according to Claim 6, having a data connection (3, 103) to a data memory (4, 104) which contains data relating to historical and/or stored reference values of the determined measured quantity (B, D, R, R1, R2) in a machine-readable form.

8. A driver assistance system having a device according to either one of Claims 6 or 7.

## Revendications

1. Procédé de surveillance du fonctionnement d'un système d'assistance au conducteurs, comprenant les étapes suivantes :
- détection de l'environnement d'un véhicule (20) par au moins un capteur (1, 111, 121, 131),
- génération de données de capteur de l'environnement du véhicule (20),
- détermination d'au moins une grandeur de mesure (B, D, R, R1, R2) à partir des données de capteur générées,
- comparaison de ladite au moins une grandeur de mesure (B, D, R, R1, R2) à des valeurs de référence pour ladite grandeur de mesure (B, D, R, R1, R2) et édition et/ou mémorisation d'un résultat de la surveillance de fonctionnement en fonction du résultat de comparaison,
**caractérisé**
- **en ce qu'**il est procédé à une mesure unique pour la détermination de la grandeur de mesure (B, D, R, R1, R2).

2. Procédé selon la revendication 1, **caractérisé en ce que** pour l'exécution et/ou l'amélioration de la détermination d'une première grandeur de mesure (B, D, R, R1, R2), il est recouru à au moins une deuxième grandeur de mesure (B, D, R, R1, R2) déterminée sur la base de données de capteur d'au moins un autre capteur (111, 121, 131).

3. Procédé selon la revendication 1 ou la revendication 2, **caractérisé en ce que** l'éloignement spatial relatif (R, R1, R2) à des objets (21, 22, 23) est déterminé comme grandeur de mesure (B, D, R, R1, R2).

4. Procédé selon l'une des revendications 1 à 3, **caractérisé en ce que** pour la détermination de la grandeur de mesure (B, D, R, R1, R2) sont utilisées des valeurs de référence historiques et/ou mémorisées pour ladite grandeur de mesure (B, D, R, R1, R2).

5. Procédé selon l'une des revendications 1 à 4, **caractérisé en ce que** l'extension spatiale (B) et/ou la distance spatiale (D) d'objets (21, 22, 23) sont déterminées comme grandeur de mesure (B, D, R, R1, R2).

6. Dispositif pour la surveillance de fonctionnement d'un système d'assistance au conducteur, comprenant :
- au moins un capteur (1, 111, 121, 131) pour la détection de l'environnement d'un véhicule (20),
- un dispositif de détermination (2), prévu pour générer des données de capteur de l'environnement du véhicule (20) et pour déterminer au moins une grandeur de mesure (B, D, R, R1, R2) à partir des données de capteur générées,
- un dispositif de comparaison (5), prévu pour comparer ladite au moins une grandeur de mesure (B, D, R, R1, R2) à des valeurs de référence pour ladite grandeur de mesure (B, D, R, R1, R2) et
- un dispositif d'édition et/ou de mémorisation (6) pour l'édition et/ou la mémorisation d'un résultat de la surveillance de fonctionnement en fonction du résultat de comparaison,
**caractérisé en ce que**
ledit dispositif est prévu pour l'exécution d'un procédé selon l'une des revendications précédentes.

7. Dispositif selon la revendication 6, comprenant une liaison informatique (3, 103) à une mémoire de données (4, 104) contenant des données relatives à des valeurs de référence historiques et/ou mémorisées pour ladite grandeur de mesure (B, D, R, R1, R2) sous forme lisible par machine.

8. Système d'assistance au conducteur avec un dispositif selon la revendication 6 ou la revendication 7.
